Europäisches Patentamt

(19) European Patent Office

Office européen des brevets

(11) Publication number: **0 183 553**
**A2**

(12) # EUROPEAN PATENT APPLICATION

(21) Application number: 85308675.9

(22) Date of filing: 28.11.85

(51) Int. Cl.⁴: **B 29 C 45/16**
**B 29 C 45/00**

(30) Priority: 29.11.84 JP 252591/84

(43) Date of publication of application:
04.06.86 Bulletin 86/23

(84) Designated Contracting States:
BE DE FR GB IT NL

(71) Applicant: Toray Silicone Company Limited
2-8 Nihonbashi Muromachi
Chuo-ku Tokyo 103(JP)

(72) Inventor: Shimizu, Koji
4,25,14 Aobadai
Ichihara-shi Chiba Prefecture(JP)

(72) Inventor: Hamada, Mitsuo
3-5-17, Ohkubo
Kisarazu-shi Chiba Prefecture(JP)

(74) Representative: Lewin, John Harvey et al,
Elkington and Fife High Holborn House 52/54 High
Holborn
London WC1V 6SH(GB)

(54) Method for injection molding unitary articles comprising a plurality of cohesively bonded, cured, silicone rubber compositions.

(57) Unitary molded articles are fabricated by successively injecting two or more liquid silicone rubber compositions into adjoining sections of a mold cavity. The viscosities of successively injected compositions are within specified limits. Each of the compositions forms a discrete section of the final cured article, and adjacent sections are cohesively bonded to one another.

EP 0 183 553 A2

## METHOD FOR INJECTION MOLDING UNITARY ARTICLES COMPRISING A PLURALITY OF COHESIVELY BONDED, CURED, SILICONE RUBBER COMPOSITIONS

This invention relates to the fabrication of silicone rubber articles. More particularly, this invention relates to a method for fabricating unitary silicone rubber articles comprising at least two cohesively bonded sections formed from different liquid silicone rubber compositions.

The contact portion of an electronic device such as the keyboard of an electronic desk calculator or computer is usually composed of different silicone rubbers, such as an insulating rubber and a conductive rubber, that are bonded to each other to form a single body.

The prior art teaches producing this type of unitary molding by first press molding each of the individual different silicone rubber compositions which are ultimately to be bonded. The resulting moldings are then bonded together with an adhesive to yield a single unitary body. Alternatively, a previously press-molded silicone rubber and an unvulcanized silicone rubber are both placed in the same metal mold and the resultant composite is then press-molded to yield a unitary body.

The drawbacks to the first of the aforementioned prior art methods are the long time required to bond the different rubbers together, the low adhesive strength and poor dimensional accuracy of the final product. As a result, the proportion of defective moldings is high and productivity is low. While the dimensional accuracy of products prepared using the second of the aforementioned methods is excellent, the adhesive strength is not necessarily high, resulting in low productivity of acceptable products.

An objective of the present invention is to eliminate the aforementioned drawbacks by providing a method for the injection molding and concurrent bonding of a plurality of silicone rubber compositions to form a unitary article. The resultant molded articles exhibit a low percentage of defects, high adhesive strength and can be made at a high production rate.

Summary of the Invention

In accordance with the method of this invention, unitary molded articles are fabricated by successively injecting two or more liquid silicone rubber compositions into adjoining sections of a mold cavity. The viscosities of successively injected compositions are within specified limits. Each of the compositions forms a discrete section of the final cured article, and adjacent sections are cohesively bonded to one another.

Detailed Description of the Invention

This invention provides a method for injection molding silicone rubber articles comprising at least two discrete, cohesively bonded sections, said method consisting essentially of the following sequence of steps:

1. Injecting a first liquid silicone rubber composition into a mold cavity, the apparent viscosity of said first composition ($v^1$) being from 10 to $10^7$ Pa.s at a shear rate of 10 $sec^{-1}$ and a temperature of 25°C;

2. Injecting a second liquid silicone rubber composition into a mold cavity that is partially occupied by said first composition while avoiding any substantial intermixing of said first and second compositions, where the apparent viscosity of said second composition ($v^2$) is from 9.1 to 9.1 x $10^6$ Pa.s at a shear rate of 10 $sec^{-1}$ and a temperature of 25°C, and the ratio $v^1$:$v^2$ is at least 1.1:1;

3.  Curing said first and second compositions to form said article.

The liquid silicone rubber compositions used in accordance with the present method are principally composed of a liquid polyorganosiloxane containing reactive groups, a filler and a cross linking agent and/or a curing catalyst. The resultant composition is pumpable at room temperature and can be cured into a rubber by standing at room temperature or by heating. The compositions can be of the "slumping" or "non-slumping" type.

The curing mechanism for the compositions can be an addition reaction, an organoperoxide catalyzed free radical reaction or a condensation reaction. Addition reactions and free radical reactions are preferred from the standpoint of curing rate and curing uniformity. Most preferably the first and second silicone rubber compositions comprise a vinyl-containing polymer selected from the group consisting of dimethylvinylsiloxy terminated polydimethylsiloxanes and dimethylvinylsiloxy terminated dimethylsiloxane/ methylvinylsiloxane copolymers, a polymethylhydrogensiloxane and a platinum-containing catalyst.

The first of the compositions to be injected in accordance with the present method exhibits an apparent viscosity at 25° C, represented hereinafter by $v^1$, of from 10 to $10^7$ Pa.s, preferably from 10 to $10^5$ Pa.s. These values are measured at a shear rate of $10^{-1}$ sec.

The apparent viscosity at 25°C of the liquid silicone rubber composition injected second, represented

hereinafter by $v^2$, must be from 9.1 to 9.1 x $10^5$ Pa.s, preferably from 9.1 to 9.1 x $10^4$ Pa.s, measured using a shear rate of 10 $sec^{-1}$.

The ratio of $v^1:v^2$ must be at least 1.1:1, and is preferably at least 1.4:1. When $v^1:v^2$ is less than 1.1, the composition injected first is forcibly disturbed by the liquid silicone rubber composition injected second, with the result that the interface between the two compositions becomes unclear.

The method of the present invention requires injecting at least two compositions to form each molded article; however, 3 or more injection processes may be carried out. As used herein "first composition" and "second composition" simply denote a sequential relationship between 2 successive injection processes.

The metal mold in which the present method is performed is divided at least into upper and lower compartments. The first and second injections used to prepare a molded article can be conducted within the same cavity using the same metal mold. Alternatively, the second injection is conducted within a cavity which is newly formed after the first injection by replacing at least one section of the mold cavity used for the first injection step. The newly formed mold cavity is connected to the remaining portion of the mold cavity used for the first injection step, and is partially occupied by the first composition.

Curing at an elevated temperature is not necessarily required during the first or second injection steps; however, curing at elevated temperatures must be executed for each molding at least after the final injection. To achieve cohesive bonding between the two compositions the one injected first is preferably uncured or semicured at the time the second composition is injected.

Partitioned metal molds are manually separated and/or fitted and closed for small production runs, but this is preferably done mechanically in mass production.

Examples

The present invention will be explained using the following examples. All parts are by weight and all viscosities are measured at 25°C.

Example 1

100 parts dimethylvinylsiloxy-terminated polydimethylsiloxane with a vinyl group content of 0.5 weight percent and a viscosity of 0.5 Pa.s were mixed with heating with 10 parts Ketjenblack EC, a conductive furnace black from Lion-Akzo Co., Ltd., and 10 parts fumed silica having a specific surface area of 200 $m^2$/g. After cooling to room temperature, the resultant mixture was blended to homogeneity with 3 parts of trimethylsiloxy-terminated polymethylhydrogensiloxane having a viscosity of $10^{-5}$ $m^2$/second, 0.2 part of a 3 weight percent isopropanol solution of chloroplatinic acid and 0.01 part methylbutynol to yield a conductive liquid silicone rubber composition (I) exhibiting a viscosity of 500 Pa.s at a shear rate of 10 $sec^{-1}$.

An insulating liquid silicone rubber composition (II) with a viscosity of 300 Pa.s at a shear rate of 10 $sec^{-1}$ was prepared by the same method described above with the modification that the composition did not contain any Ketjenblack EC, and did contain 25 parts fumed silica and 20 parts fine quartz powder.

A sequential injection molder was constructed by heating a first lower fixed metal mold and a second lower fixed metal mold to 135°C. A first upper movable metal mold, cooled to 20°C, and a second upper movable metal mold heated at 135°C were positioned relative to the two lower fixed metal molds so as to be able to fit together with the lower molds and close. The mold cavities of the two lower fixed molds had identical configurations. The first upper movable metal mold was equipped with a runner and gate, and in combination with the first lower fixed metal mold formed the mold cavity for composition I, which was injected first and formed the conductive portion of the final article. The second upper movable metal mold had a molding concavity as well as a runner and gate for composition II, and in combination with the lower fixed metal mold formed a cavity having the configuration of the final article.

Using this machine, liquid silicone rubber composition I was first injected into the cavity formed by fitting together the first upper movable metal mold and the first lower fixed metal mold. The injection time was 10 seconds and the material in the mold was heated for 50 seconds. The first upper mold section was then removed and replaced with the second upper mold section. Liquid silicone rubber composition (II) was then injected into the cavity for molding the insulating part of the article using an injection time of 10 seconds and a heating time of 50 seconds. The first composition (I) was uncured when composition II was injected.

The final product was a silicone rubber molding in which a conductive part was bonded to an insulating part. The interface between the two parts was smooth, the dimensions were within specifications and the production rate was high.

The cured article was inserted into the clamps of a tensile tester in order to measure its tensile strength. Failure occurred in the conductive part, but the boundary surface was undamaged. The tensile strength in fracture was 4905 kPa.

## Example 2

100 Parts of dimethylvinylsilyl-terminated dimethylsiloxane-methylvinylsiloxane copolymer with a vinyl group content of 0.05 weight percent and a viscosity of $5 \times 10^4$ Pa.s were kneaded to homogeneity with 0.5 parts 2,5-bis(t-butylperoxy)-2,5-dimethylhexane and 10 parts Denka Black to produce a conductive liquid silicone rubber composition (III) with a viscosity of $5 \times 10^4$ Pa.s at a shear rate of 10 $sec^{-1}$.

A unified article was molded using composition III and composition II of Example 1. The method of Example 1 was used with the following alterations: composition (III) was used in place of composition (I) of Example 1, the first lower fixed metal mold and the second lower fixed metal mold were both heated to 170°C, the temperature of the first upper movable metal mold was 50°C, the temperature of the second upper movable metal mold was 160°C, the first injection time was 15 seconds, the first heating time was 120 seconds, the second injection time was 10 seconds and the second heating time was 120 seconds. The molding formed from composition III was uncured at the time composition II was injected.

The resultant silicone rubber molding contained a conductive part bonded to an insulating part. It had a smooth boundary surface, a high dimensional accuracy, and a high production rate.

The cured article was inserted in the clamps of a tensile tester in order to measure its tensile strength. Rupture occurred in the conductive part, but the boundary surface was undamaged. The tensile strength in fracture was 5297 kPa.

## Example 3

100 Parts of a dimethylvinylsiloxy-terminated dimethylsiloxane-methylvinylsiloxane copolymer with a vinyl group content of 0.05 weight percent and a viscosity of 3 Pa.s were kneaded to homogeneity with 0.5 parts 2,5-bis(t-butylperoxy)-2,5-dimethylhexane and 30 parts fumed silica with a specific surface area of 250 $m^2$/g to produce an insulating liquid silicone rubber composition (IV) with a viscosity of 2 Pa.s at a shear rate of 10 $sec^{-1}$.

A unitary molded article was fabricated using the method described in Example 2, with the exception that composition (IV) was employed in place of composition (II) for the second injection. The molding formed from composition III was uncured at the time composition IV was injected.

The final cured article contained a conductive portion bonded to an insulating portion. It had a smooth boundary surface, a very high dimensional accuracy and the production rate was high.

The cured article was inserted in the clamps of a tensile tester to measure its tensile strength. Rupture occurred in the conductive portion without damage to the interface. The tensile strength in fracture was 5297 kPa.

Comparison Example 1

100 Parts of dimethylvinylsiloxy-terminated polydimethylsiloxane with a vinyl group content of 0.23 weight percent and a viscosity of 2000cP were mixed with heating with Ketjenblack EC. The resultant composition was then cooled to room temperature and thoroughly mixed to homogeneity with 1.5 parts of a trimethylsilyl-terminated polymethylhydrogensiloxane having a viscosity of $10^{-5}m^2$/sec., 0.2 part of a 3 weight percent isopropanol solution of chloroplatinic acid and 0.01 part methylbutynol to produce a conductive liquid silicone rubber composition (V) with a viscosity of 300 Pa.s at a shear rate of 10 $sec^{-1}$.

A unitary article was injection molded using the method described in Example 1 with the exception that composition (V) was used in place of composition (I).

The conductive and insulating sections of the final molding were intermixed and the boundary surface was not smooth.

The unitary silicone rubber molded articles produced by the injection molding method of the present invention have a high dimensional accuracy and excellent adhesive strength, and are extremely useful for various electric and electronic parts such as multicolored keyboards, keyboard contacts, zebra-type connectors and ignition cables.

CLAIMS:

1. A method for injection molding silicone rubber articles comprising at least two discrete, cohesively bonded sections, said method consisting essentially of the following sequence of steps:

1. Injecting a first liquid silicone rubber composition into a mold cavity, the apparent viscosity of said first composition ($v^1$) being from 10 to $10^7$ Pa.s at a shear rate of 10 sec$^{-1}$ and a temperature of 25°C;

2. Injecting a second liquid silicone rubber composition into a mold cavity that is partially occupied by said first composition while avoiding any substantial intermixing of said first and second composition, where the apparent viscosity of said second composition ($v^2$) is from 9.1 to 9.1 x $10^6$ Pa.s at a shear rate of 10 sec$^{-1}$ and a temperature of 25°C and the ratio $v^1:v^2$ is at least 1.1:1; and

3. Curing said first and second compositions to form said article.

2. A method according to claim 1 where $v^1$ is from 10 to $10^5$ Pa.s and $v^2$ is from 91 to 9.1 x $10^4$ Pa.s.

3. A method according to claim 1 where the ratio $v^1:v^2$ is at least 1.4:1.

4. A method according to claim 1 where said first and second silicone rubber compositions are cured by an addition reaction or an organoperoxide catalyzed free radical reaction.

5. A method according to claim 4 where said addition reaction is a platinum catalyzed hydrosilation reaction.

6. A method according to claim 1 where said first and second silicone rubber compositions comprise a vinyl- containing polymer selected from the group consisting of dimethylvinylsiloxy terminated polydimethylsiloxanes and dimethylvinylsiloxy terminated dimethylsiloxane/ methylvinylsiloxane copolymers, a polymethylhydrogensiloxane, a platinum-containing catalyst and a filler.

7. A method according to claim 6 where the filler in said first silicone rubber composition is a conductive material and the filler in said second silicone rubber composition is an insulating material.

8. A method according to claim 1 where said first silicone rubber composition is partially cured prior to the injection of said second silicone rubber composition.